# EUROPÄISCHE PATENTSCHRIFT

(11) **EP 1 038 625 B1**
(45) Veröffentlichungstag und Bekanntmachung des Hinweises auf die Patenterteilung: **11.04.2007**
(21) Anmeldenummer: 00100876.2
(22) Anmeldetag: 18.01.2000
(51) Int. Cl.: B23H 7/08

(54) **Drahtelektrode**
Wire electrode
Fil électrode

(30) Priorität: 25.03.1999 DE 19913694
(43) Veröffentlichungstag der Anmeldung: 27.09.2000
(73) Patentinhaber: Berkenhoff GmbH, 35452 Heuchelheim (DE)
(72) Erfinder: Barthel, Bernd, 35745 Herborn-Merkenbach (DE); Neuser, Bernd, 35745 Herborn-Merkenbach (DE)
(74) Vertreter: Böck, Bernhard

(56) Entgegenhaltungen:
- EP-A- 0 348 594
- US-A- 5 762 726
- PATENT ABSTRACTS OF JAPAN vol. 010, no. 295 (M-523), 7. Oktober 1986 (1986-10-07) -& JP 61 109623 A (FUJIKURA LTD), 28. Mai 1986 (1986-05-28)
- PATENT ABSTRACTS OF JAPAN vol. 008, no. 258 (M-340), 27. November 1984 (1984-11-27) -& JP 59 129624 A (SUMITOMO DENKI KOGYO KK), 26. Juli 1984 (1984-07-26)
- PATENT ABSTRACTS OF JAPAN vol. 010, no. 304 (M-526), 16. Oktober 1986 (1986-10-16) -& JP 61 117021 A (FUJIKURA LTD), 4. Juni 1986 (1986-06-04)

## Beschreibung

Die Erfindung betrifft eine Drahtelektrode für das funkenerosive Schneiden mit einer elektrisch leitenden und im Wesentlichen die Zugkräfte aufnehmenden Seele und einem Mantel, der aus zumindest zwei Schichten besteht. Die Erfindung bertrifft auch ein Verfahren zur Herstellung einer Drahtelektrode.
Eine derartige Drahtelektrode und ein derartiges Verfahren ist aus EP-A-0348594 bekannt.

Ein Werkstück kann mittels einer derartigen Drahtelektrode erodiert bzw. geschnitten werden. Das Schneiden erfolgt dabei fast immer durch einen Hauptschnitt (Schnellschnitt) und einem oder mehreren Nachschnitten (Feinschnitt). Die Aufgabe des Schnellschnittes ist es, die Kontur aus dem vollen Material des Werkstückes herauszuschneiden. Das ist wegen der Menge des zu erodierenden Materials der zeitaufwendigste Arbeitsschritt des Schneidens. Um die Bearbeitungszeit so klein wie möglich zu halten, wird mit sehr hoher Entladungsenergie gearbeitet. Hierzu eignen sich Drähte mit einer Mantelschicht mit hohem Zn-Gehalt am Besten, die selbst beim Erodieren nur relativ gering verbraucht werden. Gleichzeitig muss der Erodierdraht mit einer erheblichen Geschwindigkeit durch den Schnittspalt gezogen werden, um zu gewährleisten, dass sich die Mantelschicht im Schneidspalt nicht vollständig verbraucht. Dadurch wird zwar schnell geschnitten, jedoch hat dies den Nachteil, dass die Oberflächen der geschnittenen oder erodierten Werkstückseiten für viele Anwendungen nicht von ausreichender Qualität sind. Die energiereichen Entladungsvorgänge hinterlassen Unebenheiten auf der geschnittenen Fläche. Im Übrigen wird der Schneidspalt durch den Verbrauch der Elektrode konisch. Dies erfordert einen oder mehrere Nachschnitte.

Während der Nach- oder Feinschnitte wird dann nur noch die Oberfläche des Werkstückes nachgearbeitet. Hierbei wird die Oberfläche geglättet und die nicht der Form entsprechende Kontur abgetragen. Dies wird mit geringeren Entladeenergien erreicht, so dass die geforderte Qualität des Werkstückes (Parallelität, Oberflächengüte, Maßhaltigkeit) erreicht wird. Die Anzahl der Nachschnitte richtet sich dabei vor allem nach der angestrebten Oberflächengüte des Werkstückes.

Die das Werkstück erodierenden Entladungen zwischen Erodierdraht und Werkstück erfolgen in einem deionisierten Raum. Damit in diesem deionisierten Raum zwischen der Drahtelektrode und dem Werkstück überhaupt ein Überschlag erfolgen kann, muss dazu ein leitfähiger Kanal aufgebaut werden, um den eigentlichen Impuls zu starten. Für diesen Aufbau hat sich das Element Zink als besonders günstig erwiesen. Es ermöglicht eine schnelle und sichere Bildung der ersten leitfähigen Brücken, selbst bei sehr geringen Energien bzw. elektrischen Strömen. Dieses ist gerade für Feinschnitte von Vorteil. Aufgrund dessen haben mit Zink beschichtete Drahtelektroden eine weite Verbreitung gefunden. Das Kernmaterial solcher Drahtelektroden kann beliebig sein, bevorzugt werden Kupfer, Messing, Stahl und Verbunddrähte (Stahl-Kupfer). Mit diesen zinkbeschichteten Elektroden war bei älteren WEDM-Maschinen mit leistungsschwachen Generatoren eine deutliche Leistungssteigerung des Schneidergebnisses gegenüber nicht beschichteten Elektroden möglich. Ein weiterer Vorteil war insbesondere der, dass durch die sehr leichte Verdampfbarkeit des Zinkes ein stabiler Erosionsprozess schon bei sehr geringen elektrischen Energien möglich war. Dies ist die Voraussetzung, wie oben bereits ausgeführt, für die Erosion sehr feiner Oberflächen.

Die Generatorentwicklung hat es heute möglich gemacht, immer energiereichere Funken zu erzeugen. Dadurch kehrte sich der Vorteil der leichten Verdampfbarkeit des Zinkes in einen Nachteil um, da das Zink während des Prozesses sehr schnell abgetragen wird und damit für die Erosion gerade beim Schnellschneiden nicht mehr zur Verfügung steht. Eine Erhöhung der Zinkschichtdicke zum Ausgleich dieses erosiven Verschleißes hat sich als unwirksam erwiesen.

Abhilfe konnten hier messingbeschichtete Drahtelektroden schaffen. Bei diesen messingbeschichteten Drahtelektroden diente eine hoch zinkhaltige Messinglegierung als Ummantelung des Kerndrahtes. Mit dieser Entwicklung wurde die Zinkschicht mit ihrer sehr niedrigen Verdampfungstemperatur und dem Nachteil des hohen erosiven Verschleißes durch eine Legierungsschicht mit hohem Zinkgehalt ersetzt. Dieses hatte den Vorteil, dass die äußere Mantelschicht einen höheren Widerstand gegen den erosiven Verschleiß hatte als eine reine Zinkschicht. Die Schichtdicke dieser hochzinkhaltigen Messingschicht kann weiter wesentlich dicker sein als eine reine Zinkschicht. Mit dieser Art der Elektroden war es dann möglich, neue WEDM-Maschinen mit leistungsstarken Generatoren auch für das Schnellschneiden zu betreiben. Ein Nachteil gegenüber den zinkbeschichteten Elektroden ist jedoch, dass die Oberflächengüte der erodierten Werkstücke nicht von der gleichen hohen Qualität ist wie die Oberfläche der Werkstücke, die mit zinkbeschichteten Drahtelektroden erodiert wurden. Selbst bei mehrfachem Nachschneiden mit Drähten mit diffundierten Mantelschichten werden nicht solche Oberflächengüten erzielt, wie dies mit Zn-beschichteten Elektroden erreicht wird.

Der Erfindung liegt die Aufgabe zugrunde, ein Verfahren wie auch eine Drahtelektrode vorzuschlagen, mit der es einerseits möglich ist, feinste Oberflächen an den Werkstücken herzustellen, d.h. Feinschnitte durchzuführen und andererseits das Werkstück mit hoher Geschwindigkeit im Schnellschneidverfahren zu schneiden.

Diese Aufgabe wird mit den Merkmalen des Anspruches 1 oder 12 gelöst.

Eine derartige erfindungsgemäße Drahtelektrode ist sowohl für das Schnellschneiden als auch für das Feinscheiden geeignet. Beim Schnellschneiden fließt beim Funkenübergang zwischen dem Werkstück und der Drahtelektrode ein hoher Strom. Dabei wird die äußere Schicht des Mantels unmittelbar abgetragen, so dass diese Schicht nur einen unwesentlichen Beitrag zum Schnellschnitt leistet. Die widerstandsfähige innere Schicht übernimmt die Hauptlast beim Schnellschnitt. Soll ein Feinschnitt erfolgen, fließt ein kleinerer Strom und nur die äu-ßere Schicht - d. h. die hochzinkhaltige Schicht - wird verbraucht. Die erfindungsgemäße Drahtelektrode ist somit eine Universalelektrode, die sowohl für den Schnellschnitt wie auch für einen Feinschnitt geeignet ist, mit dem eine feine Oberfläche des Werkstückes erzeugt wird. Ein Elektrodenwechsel ist während des Bearbeitungsprozesses somit nicht mehr notwendig, da mit der erfindungsgemäßen Elektrode sowohl Schnell- als auch Feinschnitte durchgeführt werden. Dies spart zum Einen Stillstands-/Rüstzeiten, und das Werkstück muss nicht jedesmal neu verfahren und justiert werden.

Vorteilhaft ist es, wenn die äußere Schicht des Mantels zu 100 % aus Zink besteht. Vorteilhaft enthält die innere Schicht des Mantels 37 bis 60 % Zink. Das Zink der inneren Schicht kann vorteilhaft als Messinglegierung vorliegen, deren Zinkanteil zwischen 40 bis 48 % beträgt. Vorteilhaft hat die innere Schicht eine homogene β- und/oder γ-Struktur. Bei einem solchen kubisch raumzentrierten Kristallgitter sind die Zinkatome derart eingebunden, dass sie ausreichend leicht zum Zünden des Lichtbogens zwischen Werkstück und Drahtelektrode aus der Drahtelektrode herausgelöst werden können, andererseits aber so fest gehalten, dass der Verbrauch begrenzt ist.

Weiter ist es vorteilhaft, wenn die innere Schicht zumindest 2,5 µm dick ist. Die äußere Schicht der Drahtelektrode hat vorteilhaft eine Schichtdicke von 0,5 - 5 µm.

In einer ersten, besonders vorteilhaften Ausführung der Drahtelektrode, besteht die Seele aus CuZn 20 mit einem Durchmesser von 0,25 mm, die innere Schicht hat einen Anteil von 45 % Zink und ist 15-20 µm dick, während die äußere Schicht eine Schichtdicke von 2 - 3 µm hat. Vorteilhaft hat die Drahtelektrode eine Zugfestigkeit von mindestens 800 N/mm².

Eine zweite, besonders geeignete Ausführung hat eine Seele aus CuZn 35, eine innere Schicht mit einem Anteil von 45 % Zink, die 10-15 µm dick ist und eine äußere Schicht mit einer Dicke von 1-2 µm. Diese zweite Ausführung der Drahtelektrode hat vorteilhaft eine Zugfestigkeit von mindestens 900 N/mm². Die Drahtelektrode sowohl in der ersten Ausführung als auch in der zweiten Ausführung kann erfindungsgemäß eine spezifisch elektrische Leitfähigkeit von 12-50 MS/m haben.

Ein erfindungsgemäßes Verfahren zur Herstellung einer der vorgenannten Drahtelektroden, läßt sich in folgende erfindungsgemäßen Verfahrensschritte unterteilen:

In einem ersten Schritt wird auf die Seele die innere Schicht aufgetragen. Dieses kann vorteilhaft durch Plattieren, Galvanisieren, Pulverbeschichten oder Feuermetallisieren erfolgen. Danach erfolgt ggf. in einem zweiten Schritt ein Diffusionsglühen der Drahtelektrode. Anschließend wird in einem weiteren Schritt die äußere Schicht auf die innere Schicht aufgebracht. Die anschließende Umformung auf einen vorbestimmten Durchmesser erfolgt danach derart, dass die Zusammensetzung und der Aufbau des Mantels gleich bleibt, wobei eine Erwärmung der Drahtelektrode, welche eine wesentliche Diffusion zur Folge hätte, unterbleibt.

Vorteilhaft kann das Diffusionsglühen im Durchlauf durch einen Wirbelbett-Ofen, bei einer von 350° auf 600° Celsius ansteigenden Temperatur, in einer Glühzeit von zwei Minuten erfolgen.

Nach dem Diffusionsglühen erfolgt eine schnelle Abkühlung zur Fixierung des Diffusionszustandes.

Zwei vorteilhafte Ausführungsbeispiele sind im Folgenden näher beschrieben:

Ein erstes Ausführungsbeispiel für eine erfindungsgemäße Drahtelektrode hat einen Durchmesser von 0,25 mm, wobei die Schichtdicke der äußeren Schicht 2 - 3 µm, die Schichtdicke der inneren Schicht 15-20 µm beträgt. Die äußere Schicht ist eine reine Zinkschicht, während die innere Schicht eine Messingschicht mit einem Zinkanteil von 45 % ist. Der Draht dieser Drahtelektrode hat eine Zugfestigkeit von ca. 800 N/mm² und eine spezifisch elektrische Leitfähigkeit, die 17 MS/m beträgt.

Ein zweites Ausführungsbeispiel für eine erfindungsgemäße Drahtelektrode hat ebenfalls einen Gesamtdurchmesser von 0,25 Millimetern wobei die Schichtdicke der äußeren Schicht 1-3 µm und die Schichtdicke der inneren Schicht 10-15 µm beträgt. Die äußere Schicht ist wiederum eine reine Zinkschicht, während die innere Schicht ebenfalls, wie schon in dem ersten Ausführungsbeispiel eine Messingschicht ist, die einen Zinkanteil von 45 % hat. Die Zugfestigkeit dieses Drahtes der Drahtelektrode beträgt ca. 900 N/mm², wobei die spezifisch elektrische Leitfähigkeit bei 15 MS/m liegt.

## Patentansprüche

1. Drahtelektrode für das funkenerosive Schneiden mit einer elektrisch leitenden und im Wesentlichen die Zugkräfte aufnehmenden Seele und einem beim Erodieren verschleißenden Mantel, der aus zwei Schichten besteht, wobei die innere Schicht des Mantels eine zum Schnellschneiden dienende Zusammensetzung aufweist, die aus einer im Wesentlichen homogenen Legierung besteht und die äußere Schicht des Mantels eine für das Feinschneiden geeignete Zusammensetzung mit einem Zinkanteil von über 80% hat, und die Schichtdicke der äußeren Schicht bis zu einem Fünftel der Schichtdicke des übrigen Mantels beträgt,
**dadurch gekennzeichnet,**
**dass** die innere Schicht einen Zinkgehalt von 37 bis 60 Gew.-% Zink hat.

2. Drahtelektrode nach Anspruch 1,
**dadurch gekennzeichnet,**
**dass** die äußere Schicht zu 100 % aus Zink besteht.

3. Drahtelektrode nach Anspruch 1 oder 2,
**dadurch gekennzeichnet,**
**dass** die innere Schicht aus Messing besteht und einen Zinkanteil von 40 bis 48 Gew.-% hat.

4. Drahtelektrode nach einem der Ansprüche 1 bis 3,
**dadurch gekennzeichnet,**
**dass** die innere Schicht eine homogene β- und/oder γ-Struktur hat.

5. Drahtelektrode nach einem der Ansprüche 1 bis 4,
**dadurch gekennzeichnet,**
**dass** die innere Schicht zumindest eine Schichtdicke von 2,5 µm hat.

6. Drahtelektrode nach einem der Ansprüche 1 bis 5,
**dadurch gekennzeichnet,**
**dass** die äußere Schicht eine Schichtdicke von 0,5 bis 5 µm hat.

7. Drahtelektrode nach einem der Ansprüche 1 bis 6,
**dadurch gekennzeichnet,**
**dass** die Seele aus CuZn 20 besteht, dass die innere Schicht einen Anteil von 45 Gew.-% Zink und eine Schichtdicke von 15-20 µm hat,
und **dass** die äußere Schicht 2 bis 3 µm hat.

8. Drahtelektrode nach Anspruch 7,
**dadurch gekennzeichnet,**
**dass** die Drahtelektrode eine Zugfestigkeit von mindestens 800 N/mm² hat.

9. Drahtelektrode nach einem der Ansprüche 1 bis 6,
**dadurch gekennzeichnet,**
**dass** die Seele aus einer CuZn-Legierung mit 35-37 Gew.-% Zn besteht, dass die innere Schicht einen Anteil von 45 Gew.-% Zink und eine Schichtdicke von 10-15 µm hat.

10. Drahtelektrode nach Anspruch 9,
**dadurch gekennzeichnet,**
**dass** die Drahtelektrode eine Zugfestigkeit von mindestens 900 N/mm² hat.

11. Drahtelektrode nach einem der Ansprüche 7 bis 10,
**dadurch gekennzeichnet,**
**dass** die Drahtelektrode eine spezifisch elektrische Leitfähigkeit von 12 bis 50 MS/m hat.

12. Verfahren zur Herstellung einer Drahtelektrode mit einer Seele und einem aus einer inneren und einer äußeren Schicht bestehenden Mantel nach einem der Ansprüche 1 bis 11,
**dadurch gekennzeichnet,**
**dass**
a) in einem ersten Schritt auf die Seele der Drahtelektrode die innere Schicht vorteilhaft durch Plattieren, Galvanisieren, Pulverbeschichten oder Feuermetallisieren aufgebracht wird, dass
b) ggf. in einem zweiten Schritt die Drahtelektrode diffusionsgeglüht wird, dass
c) in einem weiteren Schritt die äußere Schicht auf die innere Schicht aufgebracht wird, dass
d) anschließend eine Umformung der Drahtelektrode auf einen vorbestimmten Durchmesser derart erfolgt, dass die Zusammensetzung des Mantels im Wesentlichen gleich bleibt, wobei eine Erwärmung der Drahtelektrode, welche eine wesentliche Diffusion zur Folge hätte, unterbleibt.

13. Verfahren nach Anspruch 12,
**dadurch gekennzeichnet,**
**dass** das Diffusionsglühen im Durchlauf in einem Wirbelbett-Ofen mit einer von 350°C auf 600°C ansteigenden Temperatur auf einer Glühzeit von 2 Minuten erfolgt.

14. Verfahren nach einem der Ansprüche 12 oder 13,
**dadurch gekennzeichnet,**
**dass** nach dem Diffusionsglühen eine schnelle Abkühlung zur Fixierung der erhaltenen Struktur erfolgt.

15. Verfahren nach Anspruch 14,
**dadurch gekennzeichnet,**
**dass** die Struktur der inneren Schicht aus einem Gefüge aus α + β oder nur β oder γ oder aus β + γ besteht.

## Claims

1. Wire electrode for spark-erosive cutting having an electrically conducting core substantially absorbing the tensile forces and a coating which wears during erosion and consists of two layers, the inner layer of the coating having a composition which is suited for quick cutting and consists substantially of a homogenous alloy and the outer layer of the coating having a composition which is suited for fine cutting with a zinc content of more than 80 %, and the layer thickness of the outer layer amounting up to one fifth of the layer thickness of the remaining coating, **characterised in that** the inner layer has a zinc content of 37 to 60 % by weight of zinc.

2. Wire electrode according to claim 1, **characterised in that** the outer layer consists to 100 % of zinc.

3. Wire electrode according to claim 1 or claim 2, **characterised in that** the inner layer consists of brass and has a zinc content of 40 to 48 % by weight.

4. Wire electrode according to any one of claims 1 to 3, **characterised in that** the inner layer has a homogenous β and/or γ structure.

5. Wire electrode according to any one of claims 1 to 4, **characterised in that** the inner layer has at least a layer thickness of 2.5 µm.

6. Wire electrode according to any one of claims 1 to 5, **characterised in that** the outer layer has a layer thickness of 0.5 to 5 µm.

7. Wire electrode according to any one of claims 1 to 6, **characterised in that** the core consists of CuZn 20, **in that** the inner layer has a content of 45 % by weight of zinc and a layer thickness of 15 to 20 µm, and **in that** the outer layer has a thickness of 2 to 3 µm.

8. Wire electrode according to claim 7, **characterised in that** the wire electrode has a tensile strength of at least 800 N/mm².

9. Wire electrode according to any one of claims 1 to 6, **characterised in that** the core consists of a CuZn alloy with 35 to 37 % by weight of Zn, **in that** the inner layer has a content of 45 % by weight of zinc and a layer thickness of 10 to 15 µm.

10. Wire electrode according to claim 9, **characterised in that** the wire electrode has a tensile strength of at least 900 N/mm².

11. Wire electrode according to any one of claims 7 to 10, **characterised in that** the wire electrode has a specific electric conductivity of 12 to 50 MS/m.

12. Method for manufacturing a wire electrode having a core and a coating consisting of an inner layer and an outer layer, according to any one of claims 1 to 11, **characterised in that**
a) in a first step, the inner layer is advantageously applied to the core of the wire electrode by plating, galvanising, powder-coating or fire-metallising, **in that**
b) optionally in a second step, the wire electrode is homogenised, **in that**
c) in another step, the outer layer is applied to the inner layer, **in that**
d) the wire electrode is then formed to a predetermined diameter so that the composition of the coating remains substantially the same, the wire electrode not being heated, which would result in a substantial diffusion.

13. Method according to claim 12, **characterised in that** the wire electrode is homogenised while passing through a fluidised bed kiln at a temperature rising from 350 °C to 600 °C for a homogenisation time of 2 minutes.

14. Method according to either claim 12 or claim 13, **characterised in that** rapid cooling takes place after homogenisation to fix the resulting structure.

15. Method according to claim 14, **characterised in that** the structure of the inner layer consists of a composition of α + β or only β or γ or of β + γ.

## Revendications

1. Fil-électrode pour le découpage par électroérosion, comprenant une âme électriquement conductrice et qui reçoit essentiellement les forces de traction, et une enveloppe s'usant par érosion qui est composée de deux couches, la couche intérieure de l'enveloppe présentant une composition qui sert au découpage rapide et est composée d'un alliage essentiellement homogène, et la couche extérieure de l'enveloppe ayant une composition appropriée au découpage fin avec une teneur en zinc supérieure à 80 %, l'épaisseur de la couche extérieure représentant jusqu'à un cinquième de l'épaisseur de la couche du reste de l'enveloppe,
**caractérisé en ce que** la couche intérieure a une teneur en zinc de 37 à 60 % en masse.

2. Fil-électrode selon la revendication 1,
**caractérisé en ce que** la couche extérieure est composée à 100 % de zinc.

3. Fil-électrode selon la revendication 1 ou 2,
**caractérisé en ce que** la couche intérieure est composée de laiton et a une teneur en zinc de 40 à 48 % en masse.

4. Fil-électrode selon l'une des revendications 1 à 3,
**caractérisé en ce que** la couche intérieure a une structure β et/ou γ homogène.

5. Fil-électrode selon l'une des revendications 1 à 4,
**caractérisé en ce que** la couche intérieure a au moins une épaisseur de 2,5 µm.

6. Fil-électrode selon l'une des revendications 1 à 5,
**caractérisé en ce que** la couche extérieure a une épaisseur de 0,5 à 5 µm.

7. Fil-électrode selon l'une des revendications 1 à 6
**caractérisé en ce que** l'âme est composée de CuZn 20, la couche intérieure a une teneur en zinc de 45 % en masse et une épaisseur de 15 à 20 µm, et la couche extérieure est épaisse de 2 à 3 µm.

8. Fil-électrode selon la revendication 7,
**caractérisé en ce que** le fil-électrode présente une résistance à la traction d'au moins 800 N/mm².

9. Fil-électrode selon l'une des revendications 1 à 6,
**caractérisé en ce que** l'âme est composée d'un alliage de CuZn avec 35 à 37 % en masse de Zn, la couche intérieure a une teneur en zinc de 45 % en masse et une épaisseur de 10 à 15 µm.

10. Fil-électrode selon la revendication 9, **caractérisé en ce que** le fil-électrode présente une résistance à la traction d'au moins 900 N/mm².

11. Fil-électrode selon l'une des revendications 7 à 10,
**caractérisé en ce que** le fil-électrode a une conductibilité électrique spécifique de 12 à 50 MS/m.

12. Procédé de fabrication d'un fil-électrode comprenant une âme et une enveloppe composé d'une couche intérieure et d'une couche extérieure selon l'une des revendications 1 à 11,
**caractérisé en ce que**
a) au cours d'une première étape, la couche intérieure est avantageusement appliquée par placage, galvanisation, revêtement par poudre ou métallisation à chaud sur l'âme du fil-électrode,
b) éventuellement au cours d'une deuxième étape, le fil-électrode est recuit par diffusion,
c) au cours d'une autre étape, la couche extérieure est appliquée sur la couche intérieure,
d) enfin, le fil-électrode est façonné sur un diamètre prédéfini de telle sorte que la composition de l'enveloppe reste essentiellement identique, sans augmentation de la température du fil-électrode, qui aurait pour conséquence une large diffusion.

13. Procédé selon la revendication 12,
**caractérisé en ce que** le recuit par diffusion est réalisé au cours d'un passage dans un four à lit de turbulence à une température augmentant de 350°C à 600°C pendant une durée de recuit de 2 minutes.

14. Procédé selon l'une des revendications 12 ou 13,
**caractérisé en ce que**, après le recuit par diffusion, un refroidissement rapide est réalisé pour fixer la structure obtenue.

15. Procédé selon la revendication 14,
**caractérisé en ce que** la structure de la couche intérieure est composée d'une microstructure de α + β ou uniquement de β ou γ ou de β + γ.
